# EUROPEAN PATENT APPLICATION

(11) **EP 4 671 953 A1**
(43) Date of publication of application: **31.12.2025**
(21) Application number: 25181042.0
(22) Date of filing: 05.06.2025
(51) Int. Cl.: G06F 3/06

(54) **STORAGE DEVICE AND OPERATION METHOD THEREOF, AND STORAGE SYSTEM INCLUDING THE SAME**

(30) Priority: 26.06.2024 KR 20240084016; 24.09.2024 KR 20240129388
(71) Applicant: Samsung Electronics Co., Ltd., Suwon-si, Gyeonggi-do 16677 (KR)
(72) Inventor: UHM, Junyong, Suwon-si, Gyeonggi-do 16677 (KR); JO, Jeongmin, Suwon-si, Gyeonggi-do 16677 (KR); KIM, Jaesub, Suwon-si, Gyeonggi-do 16677 (KR); KIM, Jung-Gyu, Suwon-si, Gyeonggi-do 16677 (KR); SHIN, Kyung-Ho, Suwon-si, Gyeonggi-do 16677 (KR)
(74) Representative: Kuhnen & Wacker Patent- und Rechtsanwaltsbüro PartG mbB

(57) **Abstract**

An operation method of a storage device (100) includes receiving (S110) a trim performance reference table request command (CMD_REQ_TBL_TPR) from a host device (10), generating (S120), in response to the trim performance reference table request command (CMD_REQ_TBL_TPR), a trim performance reference table (TBL_TPR) representing a trim command processing performance of the storage device (100), and transmitting (S130) the trim performance reference table (TBL_TPR) to the host device (10).

## Description

### BACKGROUND

### (a) Field of the Invention

The present disclosure relates to a semiconductor storage device. More specifically, the present disclosure relates to a storage device that controls a trim performance, an operation method of the storage device, and a storage system including the storage device.

### (b) Description of the Related Art

A flash memory based storage device may perform a read/write operation with a page unit, and may perform an erase operation with a block unit. Due to a difference between the unit of the read/write operation and the unit of the erase operation, a storage controller of the based storage device generally manages mapping between a logical address managed by a host and a physical address managed by the storage device.

The host device may issue a trim command to erase data stored at a specific logical address. The storage controller may perform a trim operation in response to the trim command. For example, the storage controller may deallocate the logical address corresponding to the trim command from physical address. The host device may store new data at the deallocated logical address. The storage controller may perform a garbage collection operation to reclaim a storage space corresponding to the deallocated physical address. For example, in NAND flash memory, a trim operation refers to a process of marking unused or invalid data blocks for deletion, improving write performance and prolonging the lifespan of the flash memory. The trim operation is commonly used in Solid-State Drives (SSDs) and other NAND-based storage devices to manage the efficient use of memory. When data is deleted from a file system of the host device, the actual blocks in NAND flash memory are not immediately erased. Instead, the operating system of the host device marks them as invalid, but the SSD does not recognize this unless a trim command is issued. The trim operation informs the SSD which data blocks are no longer in use, allowing the controller to manage them effectively.

However, while the storage controller performs the trim operation, an input/output performance of the storage device may be deteriorated. For example, as more resources of the storage controller are allocated to processing of the trim command, the input/output performance of the storage device may be deteriorated.

### SUMMARY

The present disclosure is intended to solve the above-described technical problem. More specifically, the present disclosure relates to a storage device that controls a trim performance, an operation method of the storage device, and a storage system including the storage device.

According to an aspect of the present disclosure, an operation method of a storage device includes receiving a trim performance reference table request command from a host device, generating, in response to the trim performance reference table request command, a trim performance reference table representing a trim command processing performance of the storage device, and transmitting the trim performance reference table to the host device.

According to an aspect of the present disclosure, a storage device includes a trim performance monitoring circuit configured to generate a first plurality of trim performance parameters corresponding to a first trim load range, a trim performance reference table generation circuit configured to generate a trim performance reference table based on the first plurality of trim performance parameters, and a trim performance control circuit configured to control, according to a trim performance setting table generated based on the trim performance reference table, a processing performance for a trim command provided from a host device.

According to an aspect of the present disclosure, a storage system includes a host device implemented as a supervisor and a plurality of virtual machines including a first tenant, and a storage device configured to generate a trim performance reference table. The supervisor is configured to generate a trim performance setting table indicating a trim command processing performance for the first tenant based on the trim performance reference table, and provide the trim performance setting table to the storage device.

### BRIEF DESCRIPTION OF THE DRAWINGS

FIG. 1 is a block diagram showing a storage system according to an embodiment of the present disclosure.
FIG. 2 is a block diagram showing a storage controller of FIG. 1 in more detail.
FIG. 3 is a drawing showing some components of FIG. 2 in more detail.
FIG. 4 is a drawing showing an example of a packet structure of a trim command of FIG. 1.
FIG. 5 is a drawing showing a portion of a host memory of FIG. 1.
FIG. 6 is a drawing showing logical address ranges of FIG. 5.
FIG. 7 is a drawing showing a trim performance control table of FIG. 2 in more detail.
FIG. 8 is a drawing showing an operation of a storage system according to an embodiment.
FIG. 9 is a drawing showing an operation of a storage system according to an embodiment.
FIG. 10 is a flowchart showing an operation method of the storage system according to an embodiment of the present disclosure.
FIG. 11 is a drawing showing a trim performance reference table according to an embodiment.
FIG. 12 is a drawing showing a trim performance setting table according to an embodiment.
FIG. 13 is a block diagram showing a storage system according to an embodiment.

### DETAILED DESCRIPTION OF THE EMBODIMENTS

Below, embodiments of the present disclosure will be described clearly and in detail to such an extent that a person of an ordinary skill in the technical field of the present disclosure may easily perform the present disclosure. Details such as detailed configurations and structures are provided simply to facilitate an overall understanding of the embodiments of the present disclosure. Therefore, modifications of the embodiments described in the present disclosure may be performed by a person of an ordinary skill in the art within the scope defined by the appended claims. Moreover, descriptions of well-known functions and structures are omitted for clarity and brevity. Configurations in the drawings or a detailed description of the present disclosure may be connected to an element other than that shown in the drawings or described in the detailed description. Terms used in the present disclosure are defined considering functions of the present disclosure, and are not limited to the specific functions. The definition of the terms may be determined based on details described in the detailed description.

Elements described with reference to a term such as a driver and a block used in the detailed description may be implemented in a form of software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, an inertial sensor, a microelectromechanical system (MEMS), a passive element, or a combination thereof.

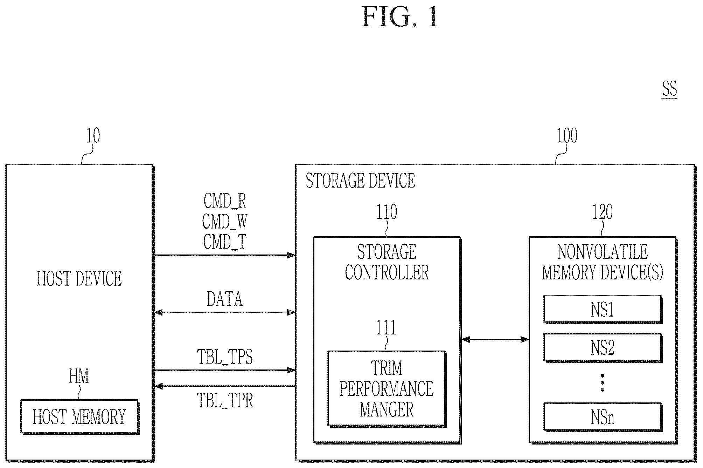

FIG. 1 is a block diagram showing a storage system according to an embodiment of the present disclosure. Referring to FIG. 1, the storage system SS may include a host device 10 and a storage device 100. In an embodiment, the storage system SS may be included in one of various information processing devices such as a personal computer, a laptop computer, a server, a workstation, a smartphone, and a tablet PC.

The host device 10 may access the storage device 100 by issuing various types of commands CMD. The storage device 100 may include a storage controller 110 and a nonvolatile memory device 120. The storage controller 110 may control an operation of the storage device 100 in response to the command CMD provided from the host device 10. For example, the storage controller 110 may provide data DATA stored in the nonvolatile memory device 120 to the host device 10 in response to a read command CMD_R, and may store data DATA provided from the host device 10 in the nonvolatile memory device 120 based on a write command CMD_W.

In an embodiment, the storage device 100 and the host device 10 may communicate based on a peripheral component interconnect express (PCIe) interface or a PCIe-based nonvolatile memory express (NVMe) interface. However, the scope of the present disclosure is not limited to a specific communication protocol used for communication between the storage device 100 and the host device 10.

The host device 10 may access the storage device 100 based on a logical address. For example, the host device 10 may provide the command CMD indicating a logical address to the storage controller 110.

The storage device 100 may manage data stored in the nonvolatile memory device 120 based on a physical address. For example, the storage controller 110 may perform a read operation and a program operation for the nonvolatile memory device 120 based on the physical address.

The storage controller 110 may separately manage the logical address and the physical address. For example, the storage controller 110 may manage an address mapping table indicating mapping information between the logical address and the physical address.

The host device 10 may issue the trim command CMD_T to erase data stored in a specific logical address. For example, the host device 10 may issue the trim command CMD_T to the storage controller 110 to inform which logical addresses are invalid from a file system of the host device 10 so that the storage controller 110 can recognize memory blocks mapped to the invalid logical addresses, thereby managing the memory blocks efficiently (e.g., performing a garbage collection on the memory blocks mapped to the invalid logical addresses). The storage controller 110 may perform a trim operation in response to the trim command CMD_T. For example, the storage controller 110 may deallocate the logical address indicated by the trim command CMD_T from a physical address. For example, the storage controller 110 may invalidate a mapping between the logical address indicated by the trim command CMD_T and the physical address. The host device 10 may store new data at the deallocated logical address, and the storage controller 110 may reclaim a storage space by performing a garbage collection operation on the physical address.

Hereinafter, an embodiment in which the trim command CMD_T is implemented as a dataset management command, which is one of a NVM command, will be representatively described. However, the scope of the present disclosure is not limited to a specific manner in which the trim command CMD_T is implemented.

In an embodiment, the trim command CMD_T may be referred to by various terms such as a deallocation command and an un-map command. However, the scope of the present disclosure is not limited thereto.

The storage controller 110 may process a plurality of commands CMD provided from the host device 10 parallelly. For example, the storage controller 110 may process the trim command CMD_T while processing the read command CMD_R or the write command CMD_W.

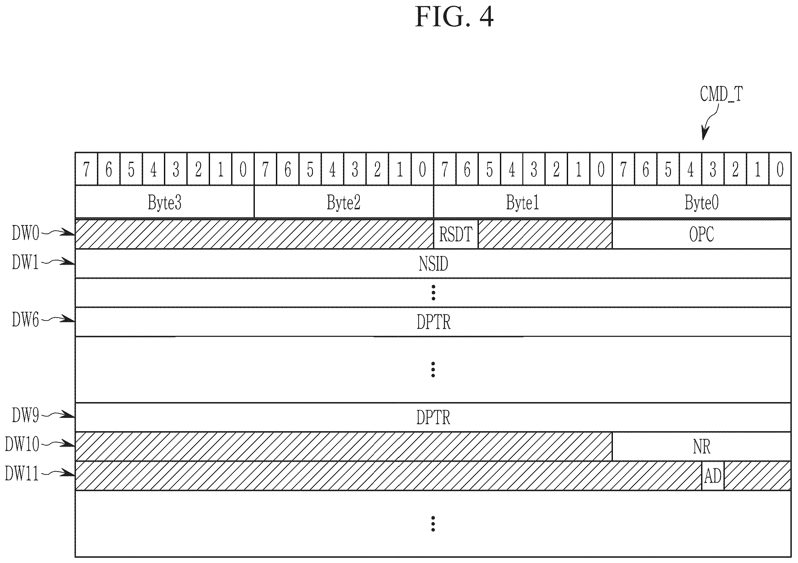

A processing load of the storage controller 110 for a single trim command CMD_T (hereinafter, it may also be referred to as a "trim load") may be different for each trim command CMD_T. For example, the host device 10 may include a host memory HM. The storage controller 110 may fetch a logical address range list (hereinafter referred to as "LST") within the host memory HM based on the trim command CMD_T. The storage controller 110 may perform a trim operation for logical address ranges represented by the logical address range list LST. The processing load of the storage controller 110 for one trim command CMD_T may vary according to the logical address range list LST stored in the host memory HM. A specific manner in which the processing load of the storage controller 110 for each trim command CMD_T is determined will be described in more detail with reference to FIGS. 4 to 6 below.

A resource of the storage controller 110 used to process the trim command CMD_T may overlap (i.e., share) a resource of the storage controller 110 used to process the read command CMD_R or the write command CMD_W. As more resources of the storage controller 110 are used to process the trim command CMD_T (e.g., if the storage controller 110 processes the trim command CMD_T with a large processing load), a resource to be used for the storage controller 110 to process the read command CMD_R or the write command CMD_W may become insufficient. As the resource of the storage controller 110 is concentrated or allocated on processing of the trim command CMD_T, a processing performance of the storage controller 110 for the read command CMD_R and the write command CMD_W (e.g., an input/output performance of the storage device 100) may be deteriorated. For example, the processing of the trim command CMD_T may delay the performing of the read command CMD_R or the write command CMD_W.

The storage controller 110 may include a trim performance manager 111. The trim performance manager 111 may control a processing performance for the trim command CMD_T of the storage controller 110 (hereinafter, it may also be referred to as a "trim performance").

The host device 10 may provide a trim performance setting table TBL_TPS to the trim performance manager 111. The trim performance manager 111 may limit the trim performance of the storage controller 110 to a specific level or less, based on the trim performance setting table TBL_TPS. The deterioration or degradation of the input/output performance of the storage device 100 due to processing of the trim command CMD_T may be minimized. For example, based on the trim performance setting table TBL_TPS, the trim performance of the storage controller 110 may be limited to a specific level to minimize the loss of the input/output performance of the storage device 100 due to the trim command CMD_T.

In an embodiment, the trim performance manager 111 may control the trim performance of the storage controller 110 differently for each processing load of the trim command CMD_T. For example, the trim performance setting table TBL_TPS may represent different trim performance for each processing load of the trim command CMD_T. The trim performance manager 111 may control the trim performance differently according to a size of the logical address range in which the trim operation is to be performed based on the trim performance setting table TBL_TPS.

According to an embodiment of the present disclosure, an operation performance of the storage device 100 may vary according to whether the trim performance of the storage controller 110 is appropriately set. For example, if the host device 10 sets the trim performance of the storage controller 110 to be excessively high, the input/output performance of the storage device 100 may be deteriorated. Conversely, if the host device 10 sets the trim performance of the storage controller 110 to be excessively low, a time required for the storage controller 110 to process the trim command may be excessively long. Therefore, the operation performance of the storage device 100 may vary depending on whether the host device 10 provides the trim performance setting table TBL_TPS indicating an appropriate trim performance to the storage controller 110.

The trim performance manager 111 may provide a trim performance reference table TBL_TPR to the host device 10 so that the host device 10 generates an appropriate trim performance setting table TBL_TPS. The trim performance reference table TBL_TPR may include various parameters for inferring the appropriate trim performance. In an embodiment, the trim performance setting table TBL_TPS may include various parameters defining the level of trim performance. For example, the storage controller may provide a level of trim performance corresponding to a trim load of a trim command CMD_T based on the trim performance setting table TBL_TPS.

The host device 10 may generate the trim performance setting table TBL_TPS indicating an appropriate trim performance based on the trim performance reference table TBL_TPR. The trim performance manager 111 may appropriately control the trim performance based on the trim performance setting table TBL_TPS.

The nonvolatile memory device 120 may include first to n-th namespaces NS1-NSn. The storage controller 110 may allocate different namespace identifiers NSID for the first to n-th namespaces NS1-NSn. For example, namespace identifiers "1" to "n" may be each allocated to the first to n-th namespaces NS1-NSn. The host device 10 may access the namespace NS corresponding to the namespace identifier by providing a specific namespace identifier to the storage controller 110.

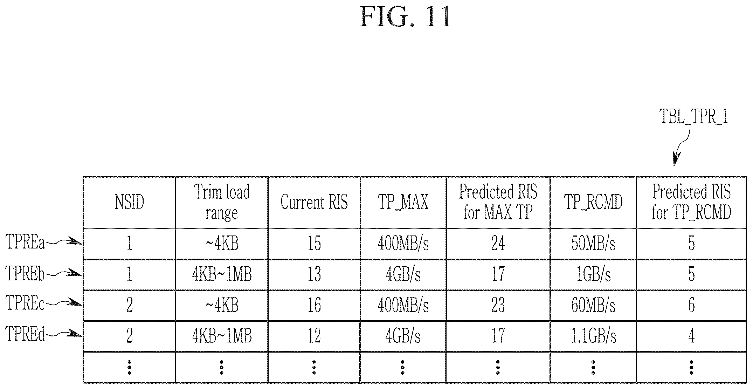

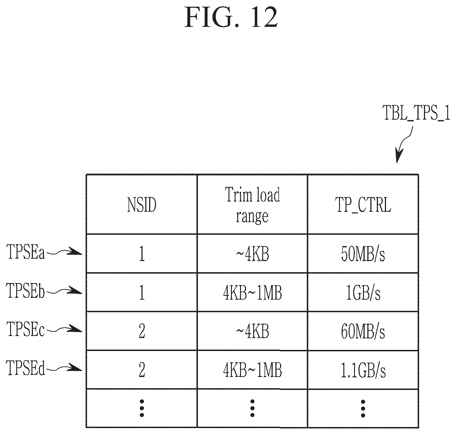

In an embodiment, the trim performance manager 111 may differently set the trim performance for each namespace NS. A method in which the trim performance manager 111 differently sets the trim performance for each namespace NS will be described in more detail with reference to FIG. 11 and to FIG. 12.

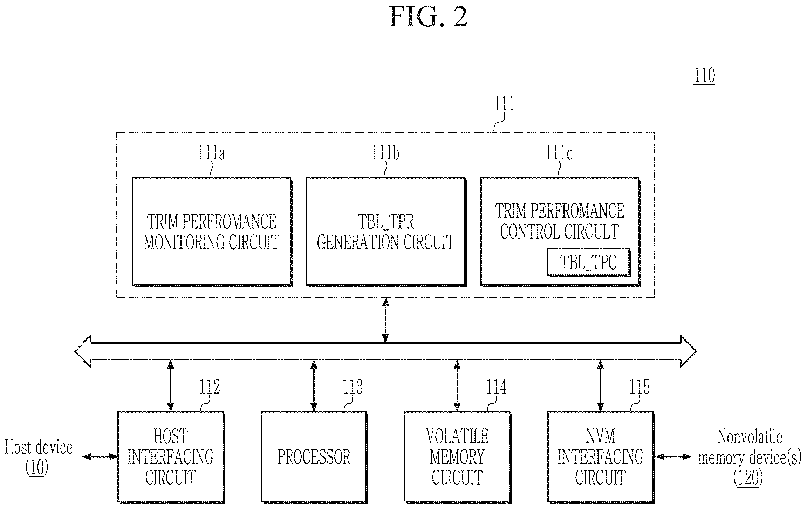

FIG. 2 is a block diagram showing the storage controller of FIG. 1 in more detail. Referring to FIG. 1 and FIG. 2, the storage controller 110 may include the trim performance manager 111, a host interfacing circuit 112, a processor 113, a volatile memory circuit 114, and a nonvolatile memory interfacing circuit 115. The trim performance manager 111, the host interfacing circuit 112, the processor 113, the volatile memory circuit 114, and the nonvolatile memory interfacing circuit 115 may be connected to each other through a bus.

The trim performance manager 111 may include a trim performance monitoring circuit 111a, a trim performance reference table generation circuit 111b, and a trim performance control circuit 111c.

The trim performance monitoring circuit 111a may generate various types of trim performance parameters related to the trim performance. For example, the trim performance monitoring circuit 111a may monitor various types of trim performance parameters that may be used for setup an appropriate trim performance, such as a current trim performance and a maximum trim performance.

The trim performance reference table generation circuit 111b may generate the trim performance reference table TBL_TPR based on a plurality of trim performance parameters generated by the trim performance monitoring circuit 111a. The trim performance reference table generation circuit 111b may provide the trim performance reference table TBL_TPR to the host device 10.

The trim performance control circuit 111c may include a trim performance control table TBL_TPC. The trim performance control circuit 111c may control the trim performance of the storage controller 110 based on the trim performance control table TBL_TPC.

The trim performance control circuit 111c may receive the trim performance setting table TBL_TPS from the host device 10. The trim performance control circuit 111c may update the trim performance control table TBL_TPC based on the trim performance setting table TBL_TPS.

According to an embodiment of the present disclosure, the trim performance manager 111 may provide the trim performance reference table TBL_TPR to the host device 10 so that the host device 10 may generate an appropriate trim performance setting table TBL_TPS; and may update the trim performance control table TBL_TPC with the trim performance setting table TBL_TPS generated based on the trim performance reference table TBL_TPR. Therefore, according to the embodiment of the present disclosure, the trim performance of the storage controller 110 may be optimally controlled.

The storage controller 110 may communicate with the host device 10 via the host interfacing circuit 112. For example, the host interfacing circuit 112 may communicate with the host device 10 based on at least one of various host interfaces such as a Peripheral Component Interconnect express (PCIe) interface, a nonvolatile memory express (NVMe) interface, a Serial ATA (SATA) interface, a Serial Attached SCSI (SAS) interface, and a universal flash storage (UFS) interface.

The processor 113 may control an overall operation of the storage controller 110. For example, the processor 113 may execute various types of programs, applications, and firmware executed in the storage controller 110.

The volatile memory circuit 114 may be used as a buffer memory or an operation memory of the storage controller 110. For example, the volatile memory circuit 114 may store an address mapping table indicating a mapping between logical and physical addresses.

In an embodiment, the volatile memory circuit 114 may be implemented as a static random access memory (SRAM) or a dynamic random access memory (DRAM).

The storage controller 110 may communicate with the nonvolatile memory device 120 through the nonvolatile memory interfacing circuit 115. For example, the nonvolatile memory interfacing circuit 115 may communicate with the nonvolatile memory device 120 based on a NAND interface.

In an embodiment, each component of the trim performance manager 111 may be implemented by hardware, software, or a combination of hardware and software. For example, at least a portion of the trim performance manager 111 may be included in the storage controller 110 in a form of a separate circuit, a separate device, or a separate chip. Additionally, at least a portion of the trim performance manager 111 may be implemented as a firmware or software module executed by the processor 113. In an embodiment, the trim performance manager 111 is shown as a separate component in FIG. 2, but some or all of the trim performance manager 111 may be included in one or more of the other components.

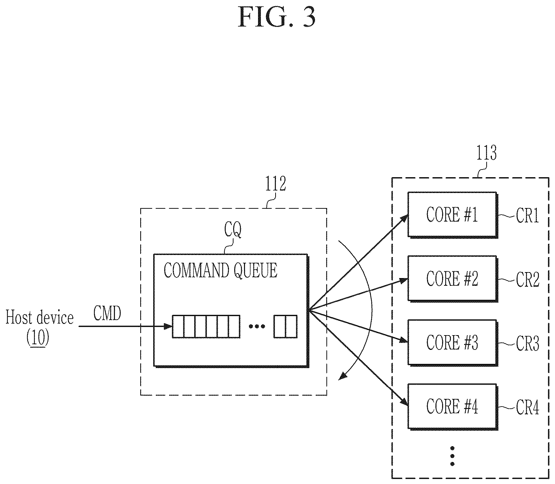

FIG. 3 is a drawing showing some components of FIG. 2 in more detail. Referring to FIGS. 1 to 3, the host interfacing circuit 112 may include a command queue CQ. The command queue CQ may store commands CMD fetched from the host device 10.

The processor 113 may include a plurality of cores CR. For example, the processor 113 may include first to fourth cores CR1 to CR4.

The host interfacing circuit 112 may allocate a plurality of commands CMD stored in the command queue CQ to the plurality of cores CR. Each of the plurality of cores CR may independently process the allocated command CMD. For example, each of the plurality of cores CR may read data stored in the nonvolatile memory device 120 in response to the read command CMD_R, may program data in the nonvolatile memory device 120 in response to the write command CMD_W, and may invalidate a mapping of some logical addresses to a physical address of the address mapping table stored in the volatile memory circuit 114 in response to the trim command CMD_T.

In an embodiment, the host interfacing circuit 112 may allocate the plurality of commands CMD stored in the command queue CQ to the plurality of cores CR in a round-robin scheme. However, the scope of the present disclosure is not limited to a specific algorithm by which the host interfacing circuit 112 distributes the plurality of commands CMD to the plurality of cores CR.

A resource used by the storage controller 110 to process the trim command CMD_T may overlap a resource used by the storage controller 110 to process the read command CMD_R or the write command CMD_W. Hereinafter, a specific example in which a processing performance of the storage controller 110 for the read command CMD_R or the write command CMD_W is deteriorated, due to the overlap of the resource used for processing the trim command CMD_T and the resource processed for the read command CMD_R or the write command CMD_W will be described.

A capacity of the command queue CQ may be limited. For example, only a predetermined number of commands CMD may be queued in the command queue CQ. For example, if the command queue CQ is in a full-state, the host interfacing circuit 112 may not fetch another command CMD from the host device 10. Therefore, when a trim command CMD_T is stored in the command queue CQ and the command queue CQ is in the full-state, a time point at which the host interfacing circuit 112 fetches the read command CMD_R or the write command CMD_W from the host device 10 may be delayed due to the existence of the trim command CMD_T.

Each of the plurality of cores CR may process commands CMD one by one. For example, while a specific core CR is processing the trim command CMD_T, the core CR may not process the read command CMD_R or the write command CMD_W.

The number of the cores CR included in the processor 113 may be limited. Therefore, as more cores CR process the trim command CMD_T, the number of the cores CR which may process the read command CMD_R or the write command CMD_W may decrease. Due to processing of the trim command CMD_T, the number of read commands CMD_R or write commands CMD_W that may be simultaneously processed may be reduced.

The plurality of cores CR may share a communication channel for the host memory HM. Therefore, when a specific core CR occupies the communication channel for the host memory HM to process the trim command CMD_T, other cores CR may not occupy the communication channel for the host memory HM to process the read command CMD_R or the write command CMD_W. For example, if the write command CMD_W is allocated to a first core CR1, the first core CR1 may have to perform direct memory access (DMA) operation to data stored in the host memory HM. However, if a second core CR2 occupies the communication channel for the host memory HM to process the trim command CMD_T, a time point at which the first core CR1 performs the direct memory access operation may be delayed. Due to processing of the trim command CMD_T of a specific core CR, processing of the read command CMD_R or the write command CMD_W of other cores CR may be delayed.

The plurality of cores CR may share the volatile memory circuit 114. For example, the plurality of cores CR may share an address mapping table stored in the volatile memory circuit 114. While the specific core CR is accessing the address mapping table, it may be difficult for another core CR to access the address mapping table. For example, if the write command CMD_W is allocated to the first core CR1, the first core CR1 should update the address mapping table to indicate a mapping between a logical address provided by the host device 10 and a physical address where data is newly stored. However, while the second core CR2 is performing a trim operation (e.g., while a mapping of a specific logical address to a physical address of the address mapping table is being invalidated), a time point at which the first core CR1 updates the address mapping table may be delayed. Due to processing of the trim command CMD_T of a specific core CR, processing of the read command CMD_R or the write command CMD_W of other cores CR may be delayed.

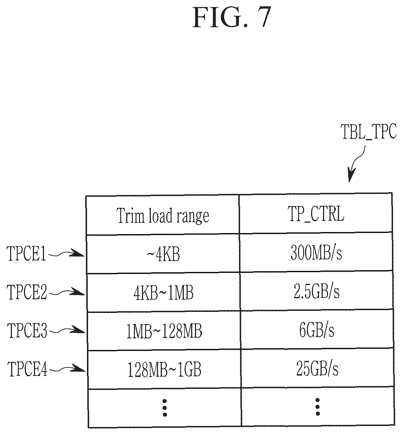

As described above, if the storage controller 110 processes the trim command CMD_T, an input/output performance of the storage device 100 may be deteriorated. Particularly, if the storage controller 110 processes the trim command CMD_T with a large trim load, the input/output performance of the storage device 100 may be significantly deteriorated. Therefore, if the trim performance manager 111 controls a processing performance of the trim command CMD_T based on a size of the trim load, an operation efficiency of the storage device 100 may be improved. A method of determining the trim load of the trim command CMD_T will be described in more detail below with reference to FIGS. 4 to 6, and a method in which the trim performance manager 111 controls the processing performance of the trim command CMD_T based on a size of each trim load will be described in more detail below with reference to FIGS. 7 to 10.

FIG. 4 is a drawing showing an example of a packet structure of the trim command of FIG. 1. In an embodiment, the trim command CMD_T has a dataset management command format.

Referring to FIGS. 1 to 4, the trim command CMD_T may include a plurality of DWORDs DW. For example, the trim command CMD_T may include 16 DWORDs DW. In an embodiment, the DWORD (Double Word) may be a 32-bit unsigned integer (4 bytes) used to store configuration settings, flags, and parameters. However, the scope of the present disclosure is not limited to the number of the DWORDs DW included in the trim command CMD_T.

The 0-th DWORD DW0 of the trim command CMD_T may include a PSDT (PRP or SGL for Data transfer) field and an OPC (operation code) field. The PSDT field may indicate whether data related to the trim command CMD_T is transmitted in a PRP (physical region page) scheme or an SGL (scatter gather list) scheme. The OPC field may include an operation code (opcode) that represents the dataset management command.

The first DWORD DW1 of the trim command CMD_T may include a NSID (namespace identifier) field. The NSID field may indicate a namespace NS corresponding to the trim command CMD_T.

The sixth to ninth DWORDs DW6-DW9 of the trim command CMD_T may include a data pointer field DPTR. The data pointer DPTR field may be used to specify data used for execution of the trim command CMD_T. For example, the data pointer field DPTR may indicate an address (or an address of a pointer which pointing an address) of the logical address range list LST within the host memory HM, which includes logical address ranges whose mapping to a physical address is to be deallocated by the trim command CMD_T.

The tenth DWORD DW10 of the trim command CMD_T may include a number of ranges field NR. For example, the number of ranges field NR may indicate the number of the logical address ranges whose mapping to the physical address is to be deallocated.

The eleventh DWORD DW11 of the trim command CMD_T may indicate an AD (attribute-deallocate) field. For example, the AD field may indicate that a packet structure shown in FIG. 3 is a packet requesting deallocation. In an embodiment, the storage controller 110 may identify that the packet structure of FIG. 3 represents a dataset management command based on the OPC field, and may identify that the packet structure of FIG. 3 represents the trim command CMD_T that is one type of the dataset management command based on the AD field.

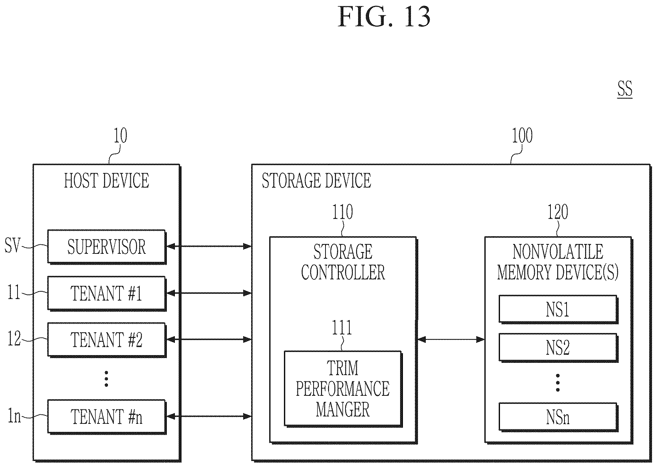

In an embodiment, the packet structure of the trim command CMD_T may not directly indicate a total size of the logical address ranges whose mapping for the physical address will be deallocated in response to the trim command CMD_T. In other words, the packet structure of the trim command CMD_T may not indicate a size of a load (i.e., a trim load) of a trim operation to be performed by the storage controller 110 in response to the trim command CMD_T. Therefore, if the host device 10 is implemented to include a supervisor and a plurality of tenants, even if one tenant issues the trim command CMD_T that causes an excessively large trim load, it may be difficult for the supervisor of the host device 10 to block transmission of the trim command CMD_T. However, according to an embodiment of the present disclosure, the trim performance may be controlled based on the trim performance control table TBL_TPC within the storage controller 110. Without blocking the transmission of the trim command CMD_T issued by each tenant by the supervisor of the host device 10, monopolization by one tenant performing the trim command CMD_T of resources within the storage controller 110 may be prevented. An embodiment in which the host device 10 includes the plurality of tenants and the supervisor will be described in more detail with reference to FIG. 13.

In an embodiment, some DWORDs DW included in the packet structure of the trim command CMD_T are representatively shown in FIG. 4, but the scope of the present disclosure is not limited thereto. For example, some of the fields shown in FIG. 4 may be included in another DWORD, or may not be included in the packet structure of the trim command CMD_T.

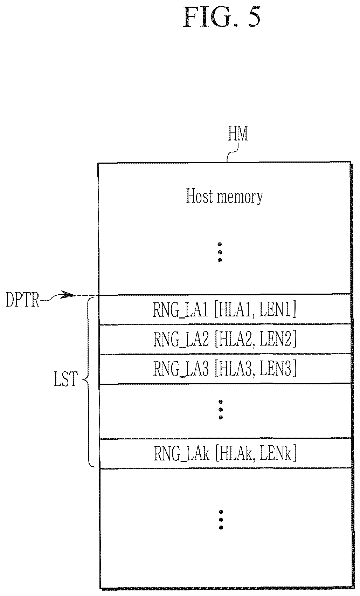

FIG. 5 is a drawing showing a portion of the host memory of FIG. 1. Referring to FIGS. 1 to 5, the DPTR field of the trim command CMD_T may indicate the logical address range list LST stored in the host memory HM. For example, the DPTR field of the trim command CMD_T may indicate a head address of the logical address range list LST.

The logical address range list LST may indicate a plurality of logical address ranges RNG_LA. For example, the logical address range list LST may indicate first to k-th logical address ranges RNG_LA1-RNG_LAk. "k" may be a value indicated by the number of ranges field NR of the trim command CMD_T.

For example, the logical address range list LST may indicate each of the first to k-th logical address ranges RNG_LA1-RNG_LAk based on a head logical address HLA and a logical address range length LEN. For example, the logical address range list LST may include the first to k-th logical address ranges RNG_LA1-RNG_LAk that respectively correspond to the first to k-th head logical addresses HLA1-HLAk and first to k-th logical address range lengths LEN1-LENk.

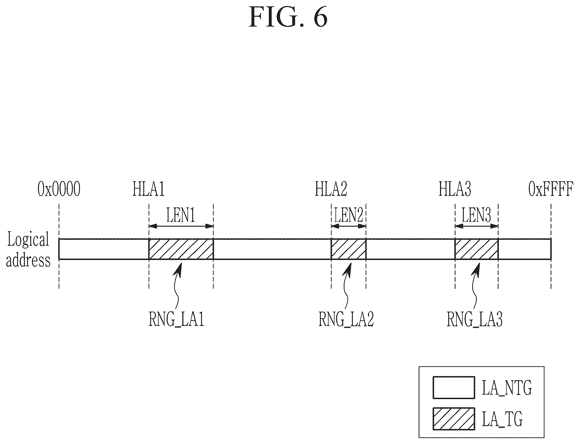

FIG. 6 is a drawing showing the logical address ranges of FIG. 5. Referring to FIGS. 1 to 6, the storage controller 110 may identify the logical address ranges RNG_LA in which the trim operation is to be performed based on the logical address range list LST. The storage controller 110 may identify logical addresses included in the identified logical address ranges RNG_LA as trim target logical addresses LA_TG.

In an embodiment, the storage controller 110 may identify logical addresses other than the identified logical address ranges RNG_LA as trim non-target logical addresses LA_NTG.

For a more detailed example, if "k" is 3, the storage controller 110 may identify logical addresses included in the first to third logical address ranges RNG_LA1-RNG_LA3 as trim target logical addresses LA_TG.

The storage controller 110 may deallocate each of the identified trim target logical addresses LA_TG from the physical address. For example, the storage controller 110 may deallocate logical blocks corresponding to the trim target logical addresses LA_TG from a physical page of the nonvolatile memory device 120.

The trim load corresponding to the trim command CMD_T may be determined based on a product of a number of the trim target logical addresses LA_TG (e.g., sum of first to k-th logical address range lengths LEN1 to LENk) for the trim command CMD_T and a size of one logical block.

The number of the trim target logical addresses LA_TG for the trim command CMD_T may correspond to the number of logical addresses included in each of the first to k-th logical address ranges RNG_LA1-RNG_LAk. The number of logical addresses included in each of the first to k-th logical address ranges RNG_LA1-RNG_LAk may be determined according to the corresponding logical address range length LEN. For example, the number of the trim target logical addresses LA_TG corresponding to one trim command CMD_T may be determined in proportion to a sum of the first to k-th logical address range lengths LEN1-LENk included in the logical address range list LST. In an embodiment, the first to k-th logical address range lengths LEN1-LENk may be the same as each other or different from each other. In an embodiment, each of the logical address ranges RNG_LA1-RNG_Ak may be mapped to a corresponding block address of the non-volatile memory device 120.

In this way, the storage controller 110 may determine the trim load for the trim command CMD_T after the logical address range list LST stored in the host memory HM is accessed.

FIG. 7 is a drawing showing the trim performance control table of FIG. 2 in more detail. Referring to FIGS. 1 to 7, the trim performance control table TBL_TPC may include a plurality of trim performance control entries TPCE. For example, the trim performance control table TBL_TPC may include first to fourth trim performance control entries TPCE1-TPCE4.

Each of the plurality of trim performance control entries TPCE may correspond to trim load range different each other. For example, the first trim performance control entry TPCE1 may correspond to a trim load range of 4 KB or less, the second trim performance control entry TPCE2 may correspond to a trim load range of 4 KB to 1 MB, the third trim performance control entry TPCE3 may correspond to a trim load range of 1 MB to 128 MB, and the fourth trim performance control entry TPCE4 may correspond to a trim load range of 128 MB to 1 GB.

Each of the plurality of trim performance control entries TPCE may include a trim performance control level TP_CTRL different each other. For example, the first to fourth trim performance control entries TPCE1-TPCE4 may include trim performance control levels TP_CTRL of "300 MB/s", "2.5 GB/s", "6 GB/s", and "25 GB/s", respectively.

The trim performance control circuit 111c may control the trim performance of the storage controller 110 for each trim load based on the trim performance control table TBL_TPC. More specifically, the trim performance control circuit 111c may calculate the trim load of the trim command CMD_T. The trim performance control circuit 111c may control the trim performance for the trim command CMD_T based on the trim performance control level TP_CTRL corresponding to the trim load range including the calculated trim load. For example, if the trim command CMD_T with 64 MB trim load is provided to the storage controller 110, the trim performance control circuit 111c may control the trim performance for the trim command CMD_T to "6 GB/s" or less.

In this way, the trim performance control circuit 111c may differently control the trim performance according to the trim load of the trim command CMD_T based on the trim performance control table TBL_TPC. The trim performance is limited to the trim performance control level TP_CTRL determined for each trim load range, and thus an excessive use of resource of the storage controller 110 to process a specific trim command CMD_T may be prevented.

In an embodiment, each of the plurality of trim performance control entries TPCE each correspond to a different combination of the namespace identifier NSID and the trim load range. For example, some of the plurality of trim performance control entries TPCE may correspond to namespaces NS different each other. The trim performance manager 111 may differently control the trim performance for each namespace based on the trim performance control table TBL_TPC. A method in which the trim performance control table TBL_TPC is updated with the plurality of trim performance control entries TPCE corresponding to the different combination of the namespace identifier NSID and the trim load range will be described in more detail with reference to FIG. 11 and FIG. 12.

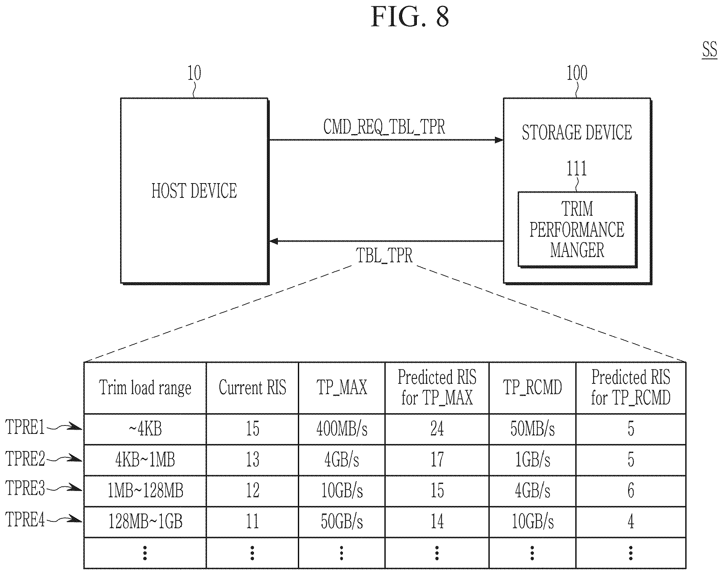

FIG. 8 is a drawing showing an operation of a storage system according to an embodiment. Referring to FIGS. 1 to 8, a host device 10 may issue a trim performance reference table request command CMD_REQ_TBL_TPR to the storage device 100.

In an embodiment, the trim performance reference table request command CMD_REQ_TBL_TPR may be implemented as a get feature command.

The trim performance monitoring circuit 111a may generate various types of trim performance parameters in response to the trim performance reference table request command CMD_REQ_TBL_TPR. For example, the trim performance monitoring circuit 111a may generate at least one of a current resource interference score RIS, a maximum trim performance TP_MAX, a predicted resource interference score RIS for the maximum trim performance TP_MAX, a recommended trim performance TP_RCMD, and a predicted resource interference score RIS for the recommended trim performance TP_RCMD. However, the scope of the present disclosure is not limited thereto, and the trim performance monitoring circuit 111a may generate various types of trim performance parameters not shown in FIG. 8, or may not generate some of the trim performance parameters shown in FIG. 8.

The trim performance monitoring circuit 111a may generate one or more trim performance parameters for each trim load. For example, the trim performance monitoring circuit 111a may generate one or more trim performance parameters for each of the trim load ranges described above with reference to FIG. 7.

In an embodiment, the resource interference score RIS may indicate an overlap level of i) 'resources used by a storage controller 110 to process the trim command CMD_T' and ii) 'resources used to process the read command CMD_R or the write command CMD_W. For example, the resource interference score RIS may be a parameter used to determine an affecting level between the trim command CMD_T and input/output operations. However, the scope of the present disclosure is not limited to a specific manner in which the resource interference score RIS is calculated.

In an embodiment, 'the current resource interference score RIS' may indicate an overlap level of i) 'resources currently used by the storage controller 110 to process the trim command CMD_T' and ii) 'resources currently used to process the read command CMD_R or the write command CMD_W'.

In an embodiment, 'the maximum trim performance TP_MAX' may represent the trim performance in case of the storage controller 110 processes only the trim command CMD_T. In other words, the maximum trim performance TP_MAX may indicate a trim load processing speed in case of the storage controller 110 processes only the trim command CMD_T without processing the read command CMD_R and the write command CMD_W.

In an embodiment, 'the predicted resource interference score RIS for the maximum trim performance TP_MAX' may indicate an overlap level of i) 'resources used by the storage controller 110 to process the trim command CMD_T' and ii) 'resources used to process the read command CMD_R or the write command CMD_W, in case of the trim performance for the trim command CMD_T is controlled based on the maximum trim performance TP_MAX.

In an embodiment, 'the recommended trim performance TP_RCMD' may represent the trim performance that satisfies both a processing speed of the trim command CMD_T of the storage controller 110 and an input/output speed of the storage device 100 at an appropriate level. The recommended trim performance TP_RCMD may represent the trim performance that the storage controller 110 suggests the host device 10 to use for generating a trim performance setting table TBL_TPS .

In an embodiment, the trim performance monitoring circuit 111a may calculate the recommended trim performance TP_RCMD based on the current resource interference score RIS and the maximum trim performance TP_MAX. However, the scope of the present disclosure is not limited thereto.

In an embodiment, the predicted resource interference score RIS for the recommended trim performance TP_RCMD may indicate an overlap level of i) 'resources used by the storage controller 110 to process the trim command CMD_T' and ii)_'resource used to process the read command CMD_R or the write command CMD_W, in case of the trim performance for the trim command CMD_T is controlled based on the recommended trim performance TP_RCMD.

The trim performance reference table generation circuit 111b may generate a trim performance reference table TBL_TPR based on the plurality of trim performance parameters generated from the trim performance monitoring circuit 111a.

The trim performance reference table TBL_TPR may include a plurality of trim performance reference entries TPRE. For example, the trim performance reference table TBL_TPR may include first to fourth trim performance reference entries TPRE1-TPRE4.

Each of the plurality of trim performance reference entries TPRE may correspond to different trim load range each other. For example, the first to fourth trim performance reference entries TPRE1-TPRE4 may respectively correspond to the trim load ranges of the first to fourth trim performance control entries TPCE1-TPCE4 described above with reference to FIG. 7. However, the scope of the present disclosure is not limited thereto, and a trim load range of each of the plurality of trim performance reference entries TPRE may be independently determined from the trim load ranges of the plurality of trim performance control entries TPCE.

In an embodiment, the trim load range corresponding to each of the plurality of trim performance reference entries TPRE may be predetermined based on a control of the host device 10. For example, the trim load range corresponding to each trim performance reference entry TPRE may be determined based on a separate command (e.g., a set feature command) issued from the host device 10 before the trim performance reference table request command CMD_REQ_TBL_TPR is issued. However, the scope of the present disclosure is not limited thereto.

Each of the plurality of trim performance reference entries TPRE may include one or more trim performance parameters for a trim load range corresponding thereto. For example, the first trim performance reference entry TPRE1 may include the current resource interference score RIS "15", the maximum trim performance TP_MAX "400 MB/s", the predicted resource interference score RIS for the maximum trim performance TP_MAX "24", the recommended trim performance TP_RCMD of "50 MB/s", and the predicted resource interference score RIS for the recommended trim performance TP_RCMD "5" which are corresponding to the trim load range of 4 KB or less. For a more concise description, a detailed description of a trim performance parameter included in another trim performance control entry TPCE is omitted.

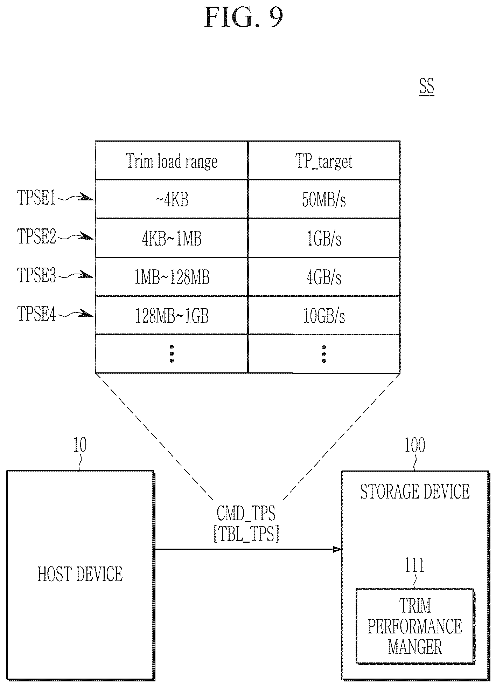

The trim performance reference table generation circuit 111b may provide the trim performance reference table TBL_TPR to the host device 10. The host device 10 may generate the trim performance setting table TBL_TPS based on the trim performance reference table TBL_TPR. A configuration of the trim performance setting table TBL_TPS will be described in more detail with reference to FIG. 9.

According to the embodiment of the present disclosure, the trim performance manager 111 may provide the trim performance reference table TBL_TPR to the host device 10 to help the host device 10 to generate an optimal trim performance setting table TBL_TPS. In an embodiment, the host device 10 identifies various performance parameters of the storage device 100, and a more appropriate trim performance setting table TBL_TPS may be generated.

FIG. 9 is a drawing showing an operation of a storage system according to an embodiment. Referring to FIGS. 1 to 9, a host device 10 may generate the trim performance setting table TBL_TPS based on the trim performance reference table TBL_TPR.

The trim performance setting table TBL_TPS may include a plurality of trim performance setting entries TPSE. For example, the trim performance setting table TBL_TPS may include first to fourth trim performance setting entries TPSE1-TPSE4.

Each of the plurality of trim performance setting entries TPSE may correspond to trim load range different each other. For example, the first to fourth trim performance setting entries TPSE1-TPSE4 may respectively correspond to the trim load ranges of the first to fourth trim performance reference entries TPRE1-TPRE4 described above with reference to FIG. 8. However, the scope of the present disclosure is not limited thereto, and a trim load range of each of the plurality of trim performance setting entries TPSE may be independently determined from the trim load ranges of the plurality of trim performance control entries TPCE and the trim load ranges of the plurality of trim performance reference entries TPRE.

Each of the plurality of trim performance setting entries TPSE may represent a target trim performance TP_target for the trim load range corresponding to each of the plurality of trim performance setting entries TPSE. The host device 10 may determine the target trim performance TP_target of each of the plurality of trim performance setting entries TPSE based on the trim performance reference entry TPRE corresponding to the trim load range (e.g., the trim performance reference entry TPRE corresponding to the same trim load range). For example, the host device 10 may determine target trim performances TP_target of the first to fourth trim performance setting entries TPSE1 to TPSE4 based on the first to fourth trim performance reference entries TPRE1-TPRE4, respectively. The first trim performance setting entry TPSE1 may indicate the target trim performance TP_target of "50 MB/s", the second trim performance setting entry TPSE2 may indicate the target trim performance TP_target of "1 GB/s", the third trim performance setting entry TPSE3 may indicate the target trim performance TP_target of "4 GB/s", and the fourth trim performance setting entry TPSE4 may indicate the target trim performance TP_target of "10 GB/s".

In an embodiment, the host device 10 may determine, based on a recommended trim performance TP_RCMD of each of the plurality of trim performance reference entries TPRE, a target trim performance TP_target of a trim performance setting entry TPSE corresponding thereto. For example, the host device 10 may determine the target trim performance TP_target of the first trim performance setting entry TPSE1 based on the recommended trim performance TP_RCMD of the first trim performance reference entry TPRE1. However, the scope of the present disclosure is not limited thereto.

In an embodiment, the host device 10 may determine, based on one or more trim performance parameters included in each of the plurality of trim performance reference entries TPRE, a target trim performance TP_target of the trim performance setting entry TPSE corresponding thereto. For example, the host device 10 may determine the target trim performance TP_target of the first trim performance setting entry TPSE1 based on at least one of a current resource interference score RIS, a maximum trim performance TP_MAX, a predicted resource interference score RIS for the maximum trim performance TP_MAX, a recommended trim performance TP_RCMD, and a predicted resource interference score RIS for the recommended trim performance TP_RCMD which are included in the first trim performance reference entry TPRE1. However, the scope of the present disclosure is not limited thereto.

In an embodiment, the host device 10 may determine a target trim performance TP_target of each of the trim performance setting entries TPSE, so that a maximum trim performance TP_MAX of each of the plurality of trim performance reference entries TPRE is greater than a target trim performance TP_target corresponding thereto. For example, the host device 10 may set the target trim performance TP_target of the first trim performance setting entry TPSE1 to be lower than the maximum trim performance TP_MAX of the first trim performance reference entry TPRE1.

In an embodiment, the host device 10 may determine each of the plurality of trim performance setting entries TPSE based on a quality of service (QoS) required by each of a plurality of tenants included in the host device 10. For example, the QoS in virtual machine (VM) environments may refer to the ability to manage and prioritize resources (CPU, memory, disk, network) to ensure that critical applications or tenants receive the necessary performance while preventing resource contention.

The host device 10 may provide the trim performance setting table TBL_TPS to the storage device 100 based on a trim performance setting command CMD_TPS. For example, the host device 10 may provide the trim performance setting table TBL_TPS to the storage device 100 as a command sequence of the trim performance setting command CMD_TPS.

In an embodiment, the trim performance setting command CMD_TPS may be implemented as a set feature command.

The trim performance control circuit 111c may update a trim performance control table TBL_TPC based on the trim performance setting table TBL_TPS. For example, the trim performance control circuit 111c may update the plurality of trim performance control entries TPCE based on the plurality of trim performance setting entries TPSE.

According to the embodiment of the present disclosure, the host device 10 may generate an optimal trim performance setting table TBL_TPS based on the trim performance reference table TBL_TPR, so that the trim performance control table TBL_TPC may be updated based on the optimal trim performance setting table TBL_TPS. The trim performance manager 111 may manage both an input/output performance and a trim performance of the storage device 100 at an appropriate level based on the trim performance control table TBL_TPC.

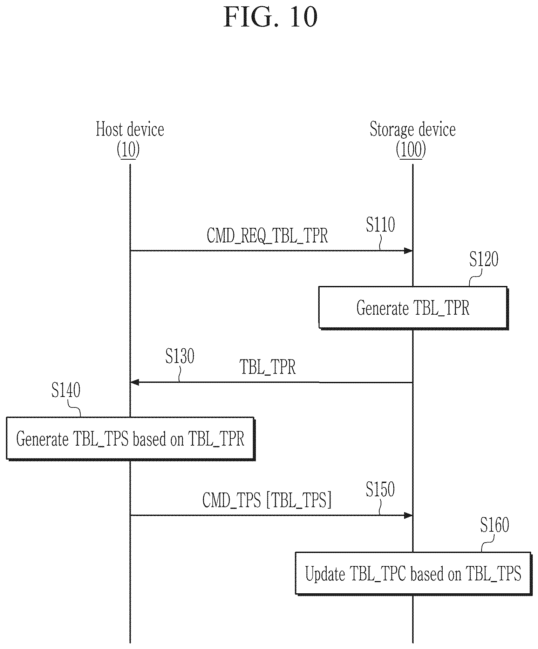

FIG. 10 is a flowchart showing an operation method of the storage system according to an embodiment of the present disclosure. Referring to FIGS. 1 to 10, in an operation S110, the host device 10 may provide the trim performance reference table request command CMD_REQ_TBL_TPR to the storage device 100.

In an operation S120, the storage device 100 may generate the trim performance reference table TBL_TPR. For example, the trim performance monitoring circuit 111a may generate various types of trim performance parameters in response to the trim performance reference table request command CMD_REQ_TBL_TPR. The trim performance reference table generation circuit 111b may generate the trim performance reference table TBL_TPR based on the plurality of trim performance parameters generated from the trim performance monitoring circuit 111a.

In an operation S130, the storage device 100 may provide the trim performance reference table TBL_TPR to the host device 10. For example, the trim performance reference table generation circuit 111b may provide the trim performance reference table TBL_TPR to the host device 10.

In an operation S140, the host device 10 may generate the trim performance setting table TBL_TPS based on the trim performance reference table TBL_TPR. For example, the host device 10 may determine the target trim performance TP_target of each of the plurality of trim performance setting entries TPSE based on the trim performance reference entry TPRE.

In an operation S150, the host device 10 may provide the trim performance setting table TBL_TPS to the storage device 100 based on the trim performance setting command CMD_TPS. For example, the host device 10 may provide the trim performance setting table TBL_TPS to the storage device 100 as a command sequence of the trim performance setting command CMD_TPS.

In an operation S160, the storage device 100 may update the trim performance control table TBL_TPC based on the trim performance setting table TBL_TPS. For example, the trim performance control circuit 111c may update the plurality of trim performance control entries TPCE based on the plurality of trim performance setting entries TPSE.

FIG. 11 is a drawing showing the trim performance reference table according to an embodiment. Referring to FIGS. 1 to 11, the trim performance reference table TBL_TPR may be implemented as a trim performance reference table TBL_TPR_1 below. For example, the trim performance manager 111 may generate the trim performance reference table TBL_TPR_1 instead of the trim performance reference table TBL_TPR.

The trim performance monitoring circuit 111a may generate one or more trim performance parameters for each namespace and each trim load range. For example, for the first namespace NS1 corresponding to the namespace identifier NSID of "1", the trim performance monitoring circuit 111a may generate one or more trim performance parameters for the trim load range of 4 KB or less, and may generate one or more trim performance parameters for the trim load range of 4 KB to 1 MB. Also, for the second namespace NS2 corresponding to the namespace identifier NSID of "2", the trim performance monitoring circuit 111a may generate one or more trim performance parameters for the trim load range of 4 KB or less, and may generate one or more trim performance parameters for the trim load range of 4 KB to 1 MB. In this way, the trim performance monitoring circuit 111a may generate one or more trim performance parameters for each of combinations of a namespace identifier NSID and a trim load range.

In an embodiment, trim performance parameters corresponding to the same trim load range and different namespace identifiers NSID may be the same or different. For example, maximum trim performances TP_MAX corresponding to the same trim load range and the different namespace identifiers NSID may be the same. A current resource interference scores RIS, maximum trim performances TP_MAX, a predicted resource interference score RIS for the maximum trim performance TP_MAX, a recommended trim performances TP_RCMD, or a predicted resource interference score RIS for the recommended trim performance TP_RCMD which are corresponding to the same trim load range and different namespace identifiers NSID may be different from each other. However, the scope of the present disclosure is not limited thereto.

The trim performance reference table generation circuit 111b may generate the trim performance reference table TBL_TPR_1 based on the plurality of trim performance parameters generated from the trim performance monitoring circuit 111a. The trim performance reference table TBL_TPR_1 may include the plurality of trim performance reference entries TPRE. The plurality of trim performance reference entries TPRE may correspond to different combinations of a namespace identifier NSID and a trim load range. For example, the trim performance reference table TBL_TPR_1 may include first to fourth trim performance reference entries TPREa-TPREd. The first trim performance reference entry TPREa may include trim performance parameters corresponding to the namespace identifier NSID of "1" and the trim load range of 4 KB or less; and the second trim performance reference entry TPREb may include trim performance parameters corresponding to the namespace identifier NSID of "1" and the trim load range of 4 KB to 1 MB. The third trim performance reference entry TPREc may include trim performance parameters corresponding to the namespace identifier NSID of "2" and the trim load range of 4 KB or less, and the fourth trim performance reference entry TPREd may include trim performance parameters corresponding to the namespace identifier NSID of "2" and the trim load range of 4 KB to 1 MB.

The trim performance reference table TBL_TPR_1 may include trim performance parameters for controlling the trim performance of each namespace NS. The trim performance reference table generation circuit 111b may provide the trim performance reference table TBL_TPR_1 to the host device 10.

FIG. 12 is a drawing showing the trim performance setting table according to an embodiment. Referring to FIG. 12, the trim performance setting table TBL_TPS may be implemented as a trim performance setting table TBL_TPS_1 below. For example, the trim performance manager 111 may generate the trim performance setting table TBL_TPS_1 based on the trim performance reference table TBL_TPR_1.

The trim performance setting table TBL_TPS_1 may include a plurality of trim performance setting entries TPSE. For example, the trim performance setting table TBL_TPS_1 may include first to fourth trim performance setting entries TPSEa-TPSEd.

Each of the plurality of trim performance setting entries TPSE may correspond to a combination of the namespace identifier NSID and the trim load range different each other. The first trim performance setting entry TPSEa may include a target trim performance TP_target corresponding to the namespace identifier NSID of "1" and the trim load range of 4 KB or less; and the second trim performance setting entry TPSEb may include a target trim performance TP_target corresponding to the namespace identifier NSID of "1" and the trim load range of 4 KB to 1 MB. The third trim performance setting entry TPSEc may include a target trim performance TP_target corresponding to the namespace identifier NSID of "2" and the trim load range of 4 KB or less, and the fourth trim performance setting entry TPSEd may include a target trim performance TP_target corresponding to the namespace identifier NSID of "2" and the trim load range of 4 KB to 1 MB. The host device 10 may independently (e.g., with different values) determine the target trim performance TP_target of each of the trim performance setting entries TPSE corresponding to the same trim load range and different namespace identifiers NSID.

In an embodiment, the host device 10 may determine the target trim performance TP_target of each of the trim performance setting entries TPSE based on a QoS and the trim performance reference table TBL_TPR_1 required for each of a plurality of namespaces NS.

The host device 10 may provide the trim performance setting table TBL_TPS_1 to the storage device 100. The storage device 100 may update the trim performance control table TBL_TPC based on the trim performance setting table TBL_TPS_1. The storage device 100 may perform a trim operation with different performance for each namespace NS and each trim load range.

FIG. 13 is a block diagram showing a storage system according to an embodiment. Referring to FIGS. 1 to 13, the storage system SS may include a host device 10 and a storage device 100.

The storage device 100 may be configured to support a multi-host or a multi-tenant. For example, the storage system SS may be implemented as a multi-tenant storage system.

The host device 10 may include a supervisor SV and first to n-th tenants 11-1n. Each of the supervisor SV and the first to n-th tenants 11-1n may access the storage device 100. For example, each of the supervisor SV and the first to n-th tenants 11-1n may independently issue a command CMD.

In an embodiment, each of the supervisor SV and the first to n-th tenants 11-1n may be a single or multi-core processor included in each of different computing nodes. Alternatively, at least some of the supervisor SV and the first to n-th tenants 11-1n may be different processors included in the same computing node. However, the scope of the present disclosure is not limited thereto, and each of the supervisor SV and the first to n-th tenants 11-1n may be a processor configured to process a different application, or a different virtual machine.

The storage device 100 may allocate different storage spaces for a plurality of tenants. For example, a storage controller 110 may respectively allocate first to n-th namespaces NS1-NSn to the first to n-th tenants 11-1n. However, the scope of the present disclosure is not limited thereto. For example, the storage controller 110 may allocate a plurality of namespaces NS to one tenant.

Each of the first to n-th tenants 11-1n may access only the namespace NS allocated by the storage device 100. For example, the first tenant 11 may access the first namespace NS1 by providing the command CMD including a namespace identifier NSID of "1" to the storage controller 110, and the second tenant 12 may access the second namespace NS2 by providing the command CMD including the namespace identifier NSID of "2" to the storage controller 110. However, the scope of the present disclosure is not limited thereto.

The supervisor SV may manage a QoS for each of the first to n-th tenants 11-1n. For example, the supervisor SV may manage the QoS for each of the first to n-th tenants 11-1n in various methods such as a scheme that adjusting a priority of commands issued from each of the first to n-th tenants 11-1n being transmitted to the storage controller 110.

Based on a processing load of a specific command CMD and a QoS for a tenant which issues the command CMD, the supervisor SV may adjust a time point at which the command CMD is transmitted to the storage controller 110. For example, the supervisor SV may identify the processing load for the specific command CMD based on a packet of the command CMD, and may adjust the time point at which the command CMD is transmitted to the storage controller 110 considering the processing load and the QoS for the tenant that issues the command CMD. However, as described above with reference to FIGS. 4 to 6, a processing load for a trim command CMD_T may not directly appear in a packet of the trim command CMD_T. Accordingly, it may be difficult for the supervisor SV to determine a time point at which the trim command CMD_T is transmitted to the storage controller 110 considering the processing load of the trim command CMD_T and the QoS for a tenant that issues the trim command CMD_T. When a tenant requesting a low QoS issues the trim command CMD_T with a large trim load, resources of the storage controller 110 may be occupied excessively to process the trim command CMD_T, so that processing of a command (e.g., a read/write command) issued by a tenant requesting a high QoS may be delayed.

The supervisor SV may control a trim performance for each of the first to n-th tenants 11-1n. For example, as similar to described with reference to FIG. 11 and FIG. 12, the supervisor SV may receive a trim performance reference table TBL_TPR_1 from the storage controller 110, and may generate a trim performance setting table TBL_TPS_1 based on the trim performance reference table TBL_TPR_1. The supervisor SV may control the trim performance for each of the first to n-th tenants 11-1n by providing the trim performance setting table TBL_TPS_1 to the storage controller 110.

The supervisor SV may determine a target trim performance TP_target for each of the first to n-th namespaces NS1-NSn based on a QoS required by each of the first to n-th tenants 11-1n. For example, if the first tenant 11 requires a low QoS, the supervisor SV may set the target trim performance TP_target for the namespace allocated to the first tenant 11 to be low. If the second tenant 12 requires a high QoS, the supervisor SV may set the target trim performance TP_target for the namespace allocated to the second tenant 12 to be high. The trim command issued from the tenant requesting the high QoS may be relatively quickly processed, and the trim command issued from the tenant requesting the low QoS may be relatively slowly processed. According to the embodiment of the present disclosure, even if the trim command with the large trim load is issued from the tenant requesting the low QoS, a phenomenon in which resources of the storage controller 110 is excessively occupied to process the trim command may be minimized.

According to the embodiment of the present disclosure, the supervisor SV may set the trim performance for each tenant considering the QoS, and the storage controller 110 may control the trim performance for each tenant. Although the supervisor SV does not directly determine the processing load of the trim command CMD_T, a processing performance of the trim command CMD_T may be controlled considering the processing load of the trim command CMD_T and the QoS for the tenant that issues the command.

The contents described above are specific embodiments for implementing the present disclosure. The present disclosure may include not only the above-described embodiments but also embodiments that may be simply changed in design or may be easily modified. Additionally, the present disclosure may also include technologies that may be easily modified and implemented using the embodiments. Therefore, the scope of the present disclosure should not be limited to the above-described embodiments, but should be defined by the claims described below.

## Claims

1. An operation method of a storage device (100), comprising:
receiving (S110) a trim performance reference table request command (CMD_REQ_TBL_TPR) from a host device (10);
generating (S120), in response to the trim performance reference table request command (CMD_REQ_TBL_TPR), a trim performance reference table (TBL_TPR) representing a trim command processing performance of the storage device (100); and
transmitting (S130) the trim performance reference table (TBL_TPR) to the host device (10).

2. The operation method of claim 1, further comprising:
receiving (S150) a trim performance setting table (TBL_TPS) from the host device (10),
wherein the trim performance setting table (TBL_TPS) is generated based on the trim performance reference table (TBL_TPR) by the host device (10).

3. The operation method of claim 2, further comprising:
updating (S160) a trim performance control table (TBL_TPC) based on the trim performance setting table (TBL_TPS), wherein the trim command processing performance is controlled using the trim performance control table (TBL_TPC).

4. The operation method of claim 3,
wherein the trim performance reference table (TBL_TPR) includes a first trim performance reference entry (TPRE) including at least one of:
a first current resource interference score (Current RIS) corresponding to a first trim load range;
a first maximum trim performance (TP_MAX) corresponding to the first trim load range;
a first predicted resource interference score (Predicted RIS) corresponding to the first trim load range and the first maximum trim performance (TP_MAX);
a first recommended trim performance (TP_RCMD) corresponding to the first trim load range; and
a second predicted resource interference score (Predicted RIS) corresponding to the first trim load range and the first recommended trim performance (TP_RCMD).

5. The operation method of claim 4,
wherein the trim performance setting table (TBL_TPS) is determined based on the first trim performance reference entry (TPRE) and includes a first target trim performance (TP_target) corresponding to the first trim load range.

6. The operation method of claim 5,
wherein the trim performance reference table (TBL_TPR) further includes a second trim performance reference entry (TPRE) including at least one of:
a second current resource interference score (Current RIS) corresponding to a second trim load range;
a second maximum trim performance (TP_MAX) corresponding to the second trim load range;
a third predicted resource interference score (Predicted RIS) corresponding to the second trim load range and the second maximum trim performance (TP_MAX);
a second recommended trim performance (TP_RCMD) corresponding to the second trim load range; and
a fourth predicted resource interference score (Predicted RIS) for the second trim load range and the second recommended trim performance (TP_RCMD), and
wherein the trim performance setting table (TBL_TPS) is determined based on the second trim performance reference entry (TPRE) and includes a second target trim performance (TP_target) corresponding to the second trim load range.

7. The operation method of claim 5 or 6, further comprising:
receiving, after the updating (S160) of the trim performance control table (TBL_TPC), a first trim command (CMD_T) corresponding to the first trim load range; and
controlling a trim command (CMD_T) processing performance for the first trim command (CMD_T) based on the first target trim performance (TP_target).

8. The operation method of claim 7, wherein:
the first trim command (CMD_T) includes a data pointer field (DPTR) indicating a starting address of a logical address range list (LST) stored in a host memory (HM) of the host device (10), and a number of ranges field (NR) indicating a number of a plurality of logical address ranges (RNG_LA) included in the logical address range list (LST);
each of the plurality of logical address ranges (RNG_LA) includes a head logical address (HLA) and a logical address range length (LEN);
a trim load for the first trim command (CMD_T) corresponds to a product of a size of a logical block and a sum of the logical address range length (LEN) of each of the plurality of logical address ranges (RNG_LA); and
the trim load for the first trim command (CMD_T) is included in the first trim load range.

9. The operation method of any one of claims 5 to 8,
wherein the first trim load range is predetermined based on a control of the host device (10).

10. The operation method of any one of claims 4 to 9, wherein:
the first trim performance reference entry (TPRE) corresponds to a first namespace (NS) included in the storage device (100); and
the trim performance reference table (TBL_TPR) further includes a third trim performance reference entry corresponding to a second namespace (NS) included in the storage device (100).

11. A storage device comprising:
a trim performance monitoring circuit (111a) configured to generate a first plurality of trim performance parameters corresponding to a first trim load range;
a trim performance reference table generation circuit (111b) configured to generate a trim performance reference table (TBL_TPR) based on the first plurality of trim performance parameters; and
a trim performance control circuit (111c) configured to control, according to a trim performance setting table (TBL_TPS) generated based on the trim performance reference table (TBL_TPR), a processing performance for a trim command (CMD_T) provided from a host device (10).

12. The storage device of claim 11,
wherein the first plurality of trim performance parameters includes at least one of:
a first current resource interference score (Current RIS) corresponding to the first trim load range;
a first maximum trim performance (TP_MAX) corresponding to the first trim load range;
a first predicted resource interference score (Predicted RIS) corresponding to the first trim load range and the first maximum trim performance (TP_MAX);
a first recommended trim performance (TP_RCMD) corresponding to the first trim load range; and
a second predicted resource interference score (Predicted RIS) corresponding to the first trim load range and the first recommended trim performance (TP_RCMD).

13. The storage device of claim 11 or 12,
wherein the trim performance reference table (TBL_TPR) includes a first trim performance reference entry (TPRE) including the first plurality of trim performance parameters.

14. The storage device of claim 13, wherein:
the trim performance monitoring circuit (111a) is configured further to generate a second plurality of trim performance parameters for a second trim load range; and
the trim performance reference table (TBL_TPR) further includes a second trim performance reference entry (TPRE) including the second plurality of trim performance parameters.

15. The storage device of claim 13, wherein:
the trim performance monitoring circuit (111a) is configured further to:
generate the first plurality of trim performance parameters corresponding to a first namespace (NS); and
generate a third plurality of trim performance parameters corresponding to a second namespace (NS); and
the trim performance reference table (TBL_TPR) further includes a third trim performance reference entry including the third plurality of trim performance parameters.
